# EUROPEAN PATENT APPLICATION

(11) **EP 1 394 708 A1**
(43) Date of publication of application: **03.03.2004**
(21) Application number: 02720628.3
(22) Date of filing: 26.04.2002
(51) Int. Cl.: G06F 17/60, G06F 3/00

(54) **IMAGE PROVIDING DEVICE**

(30) Priority: 09.05.2001 JP 2001139364
(71) Applicant: Sony Corporation, Tokyo 141-0001 (JP)
(72) Inventor: Sakamoto, Manabu, Sony Corproation, Shinagawa-ku, Tokyo 141-0001 (JP); Nakamura, Yoshiyuki, Sony Corporation, Shinagawa-ku, Tokyo 141-0001 (JP); Anno, Tetsuya, Sony Corporation, Shinagawa-ku, Tokyo 141-0001 (JP)
(74) Representative: Pilch, Adam John Michael
(86) International application number: PCT/JP2002/004247
(87) International publication number: WO 2002/091266

(57) **Abstract**

When the balance of an amount of savings, which can be used when designing a lifestyle by a user, is calculated, an user interface which is as easy to operate as possible can be provided. On a display screen operated by the user, an event icon which is an element for at least one computation, and an event set-up section for specifying at least a one-dimensional value as a result of the event icon being set up by an operation are displayed. When the event icon is dragged-and-dropped by an operation to the event set-up section, a predetermined computation is performed on the basis of the position thereof, and on the basis of the computation result, the amount of savings is displayed.

## Description

### Technical Field

The present invention relates to an image providing apparatus, an image providing method, a computation display program, and the like. More particularly, the present invention relates to an image providing apparatus, an image providing method, a computation display program, and the like, for forming an image from the fluctuation of output content with respect to time, such as the balance of a financial product, thereby allowing the fluctuation of the output content with respect to time to be easily understood.

### Background Art

Hitherto, systems for designing a life plan for a user have been known. For example, life insurance companies propose life plans on the basis of their past experience of the life insurance companies, and they show insurance products for realizing this life plan and the installments required for these insurance products.

However, in some conventional technologies, a life plan is proposed for a user on the basis of the past experience of the life insurance company, and the life insurance company does no more than calculate only expenses necessary for this life plan. Therefore, from the viewpoint of the user, the conventional technology proposes a passive life plan of "what can be done", and the user himself/herself cannot design a life plan on the basis of the viewpoint of "what is desired to be done".

The present invention has been made with a view to overcoming such problems.

### Disclosure of Invention

The invention in accordance with Claim 1 provides an image providing apparatus, wherein the fluctuation in output content with respect to time is calculated on the basis of an initial value of the output content and a parameter affecting the fluctuation in the output content, and an image is generated from the fluctuation in the output content with respect to time. Thus, the above-described problems are overcome.

The invention in accordance with Claim 3 provides an image providing apparatus as set forth in Claim 2, wherein the output content is the balance of a financial product, the parameter is the income of a contractor of the financial product, the initial value is the balance of the financial product at a specific time, and the time is the age of the contractor at the specific time. Thus, the above-described problems are overcome.

The invention in accordance with Claim 8 provides an image providing apparatus as set forth in Claim 5, wherein, in generating the image, data for forming a two-dimensional graph from the fluctuation in the balance of the financial product with respect to time, in which the balance of the financial product and time are the respective axes, is created, data for forming an icon indicating the lifetime event into an image at the same time is created, and in the fluctuation calculation, the age of the contractor when the lifetime event corresponding to the icon is set is calculated from the time of the graph at which the icon is set up. Thus, the above-described problems are overcome.

The invention in accordance with Claim 12 provides a computation display program for describing a control procedure for a control section which comprises at least a display section and an operation input section, the program comprising the steps of displaying an event icon which is an element for at least one computation, and an event set-up section for specifying at least a one-dimensional value by setting up an event icon by an operation, performing a predetermined computation on the basis of the position of the event icon set up in the event set-up section by an operation, and displaying results on the basis of the computation results. Thus, the above-described problems are overcome.

Here, the control section has functions for selectively performing, based on a specific information element, at least, display of an image at a specific position on the display section, specification of a specific image object on the basis of information from the operation input section, specification of coordinates on the basis of the information from the operation input section, display of a specific image object at specific coordinates, and arithmetic computation. Furthermore, the computation display program is formed by a specific information element sequence, and the control section performs the operation in accordance with the information element sequence.

The invention in accordance with Claim 13 provides a computation display program as set forth in Claim 12, wherein the result display can be formed in at least two formats, a display for prompting the selection of the format is formed, the format is selected on the basis of information from the operation input section, and the result is displayed. Thus, the above-described problems are overcome.

The invention in accordance with Claim 14 provides a computation display program as set forth in Claim 12, wherein, when the operation input section detects an input operation specific to the event icon, a display for prompting an input of a numerical value is formed, and the computation is performed on the basis of the numerical value detected by the operation input section. Thus, the above-described problems are overcome.

The invention in accordance with the other claims as set forth in the claims section are concerned with those set forth in the description of the embodiments section (to be described later), and accordingly, descriptions thereof are omitted here.

### Brief Description of the Drawings

Fig. 1 shows a display screen in which an initial program, which functions as a portal page for amount of savings simulation, according to an embodiment of the present invention is activated.
Fig. 2 shows an initial display screen in which a MoneyView function is activated.
Fig. 3 shows a main display screen in which the MoneyView function is activated.
Fig. 4 shows a display screen after event icons are set up in an event set-up section.
Fig. 5 shows a display screen in which an operation for setting the amount of expenses or income, corresponding to the event icon, is performed.
Fig. 6 shows an amount of savings graph after individual adjustment elements in an adjustment element setting display are set by a user.
Fig. 7 shows a display screen in which an income/expenses balance screen is selected.
Fig. 8 shows a display screen in which a payment period screen is selected.
Fig. 9 is an overall view of a system according to the embodiment.
Fig. 10 shows the configuration of the main sections of a client.
Fig. 11 shows the configuration of a corresponding program execution section.
Fig. 12 shows the structure of a so-called initial program, which is called a portal page.
Fig. 13 is a structural view of a computation display program.
Fig. 14 is a structural view when a Windows PC is used.
Fig. 15 shows an example of the layout displayed on the display section at an initial period of this application program.
Fig. 16 shows an example display of a simulation of the amount of savings.
Fig. 17 is a view showing correspondence between various sections described in the first embodiment and another embodiment.

### Best Mode for Carrying Out the Invention

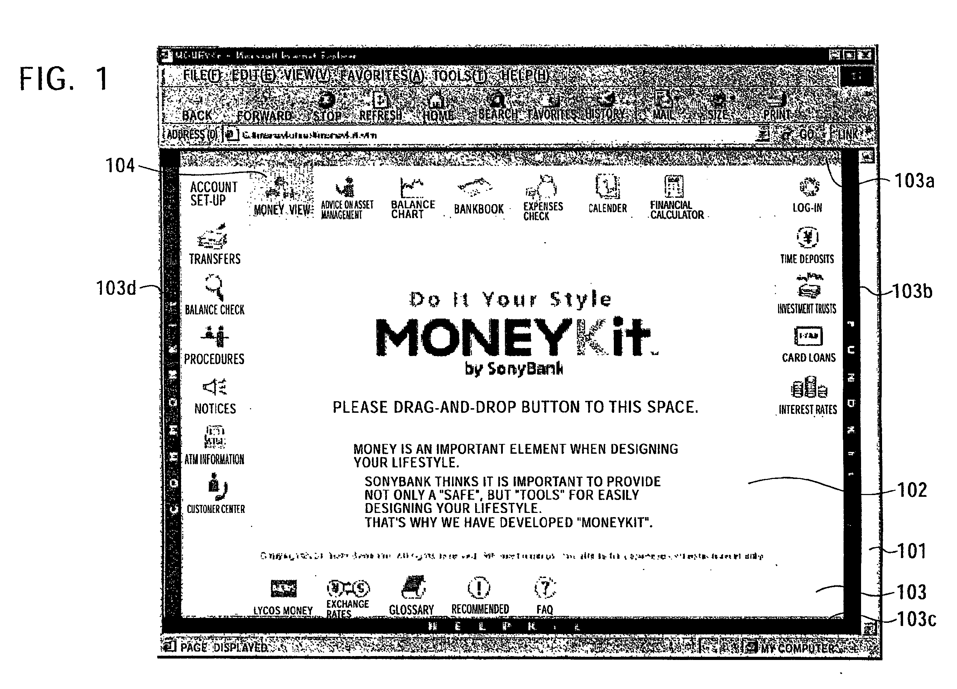

An embodiment of the present invention will be described below by using Figs. 1 to 16.

### (1. Description of display screen of amount of savings simulation)

In this embodiment, a case in which the present invention is applied to an application for displaying the amount of savings by freely setting events, having various associated incomes and expenses, which can occur during the user's lifetime (hereinafter referred to as "amount of savings simulation") is used as an example, and the operation thereof will be described. Examples of a screen which is displayed as a result of this amount of savings simulation operating will be described by using Figs. 1 to 8.

### (1.1. Display screen in which initial program is activated)

Fig. 1 shows a display screen in which an initial program, which functions as a portal page for the amount of savings simulation, is activated, which is an example of a screen displayed as a result of the amount of savings simulation operating.

In Fig. 1, a display surface 101 of the display screen has a rectangular main display surface 102 provided in the center thereof and a function display section 103 provided in such a manner as to surround the outer periphery of the main display surface 102. The function display section 103 is provided with at least one function icon 104. The function icons 104 are used to display specific functions on the main display surface 102 or to activate different programs such as a browser in order to display specific functions on another display screen. These specific functions are preassigned to the individual function icons 104.

For the function display section 103, as shown in Fig. 1, a portion along the top of the main display surface 102 is named "TOOLKit" 103a, a portion along the right of the main display surface 102 is named "FUNDKit" 103b, a portion along the bottom of the main display surface 102 is named "HELPKit" 103c, and a portion along the left of the main display surface 102 is named "COMMONKit" 103d. The function icons 104 placed in the kits 103a to 103d are placed in such a manner as to be classified into one of the kits 103a to 103d on the basis of the nature of each of the kits 103a to 103d.

For reference, the nature of each of the kits 103a to 103d will now be described. Various function icons 104 for understanding the financial position of a user who uses an image providing apparatus of this embodiment are placed in the TOOLKit 103a. Various function icons 104 for performing specific procedures for the user to manage his/her assets are placed in the FUNDKit 103b. Various function icons 104 for learning basic knowledge for the user to select a financial product are placed in the HELPKit 103c. Various function icons 104 for the user to use daily or to perform various procedures are placed in the COMMONKit 103d.

When it is desired to operate a specific function assigned to each function icon 104, the user drags-and-drops the function icon 104 corresponding to the specific function desired to be operated from among the function icons 104 displayed on the function display section 103 to the main display surface 102 by using a pointer, etc. As a result, the operation of the specific function assigned to the function icon 104 that is dragged-and-dropped to the main display surface 102 is performed.

The operation of the specific function assigned to each of the function icons 104 placed in the function display section 103 will be described below with reference to the display screen.

### (1.2. Display screen of MoneyView function)

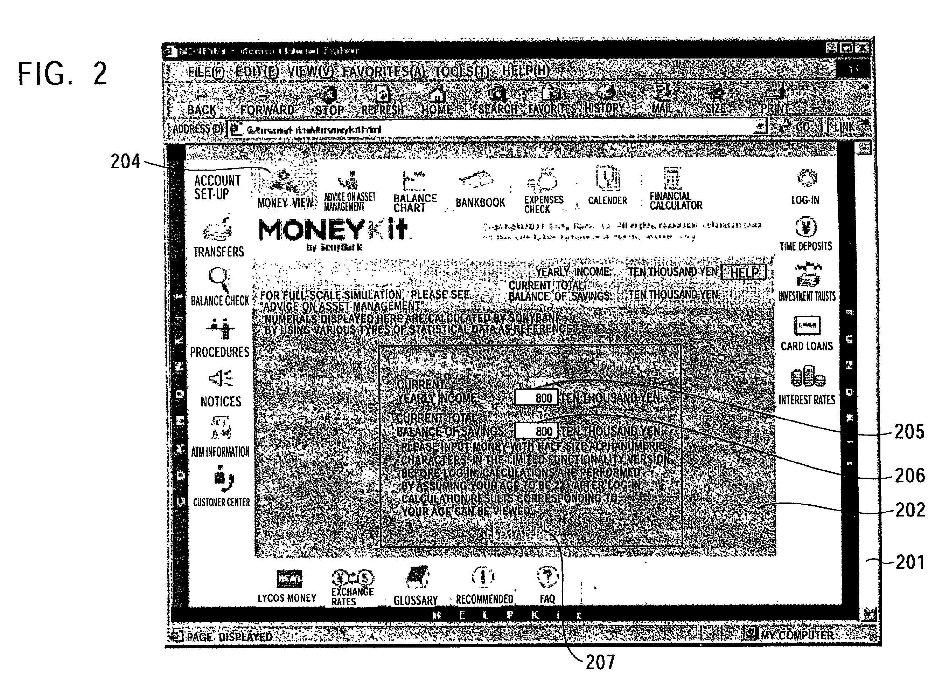

Fig. 2 shows a display screen in an initial state in which the MoneyView function is activated, which is an example of a screen displayed as a result of amount of savings simulation operating. The display screen shown in Fig. 2, as described above, is displayed on a display surface 201 by the user dragging-and-dropping a MoneyView function icon 204 placed in a TOOLKit 203a of a function display section 203 to a main display surface 202.

The MoneyView function is a function for simulating numerical values necessary for understanding the asset position, such as the income of the user and the fluctuations in the total amount of savings over a lifetime from the total amount of savings at the current time and for forming a graph from the numerical values. When fluctuations of the total amount of savings are to be calculated, fluctuations in yearly income are estimated on the basis of various statistics, and these are reflected in the fluctuations in the total amount of savings, etc.

Naturally, the fluctuations in the total amount of savings, etc., are influenced by events in the past, at the present, and expected in the future, and by the number of times events occur in lifetime. Examples of events during life include marriage, childbirth, a house purchase, and retirement. In this MoneyView function, occurrence times of events in lifetime, and incomes and expenses which occur at those times are set by the user, and the above-described fluctuations in the total amount of savings are calculated according to the user settings. At this time, the fluctuation range given to the fluctuation in the total amount of savings by the lifetime events are also estimated on the basis of various statistics.

In addition, what kind of lifestyle a user chooses influences the fluctuations in the total amount of savings. Examples of lifestyle include whether the user takes care of his/her health, how much is spent on hobbies, and whether efforts are made to become a successful person. In this MoneyView function, the user sets a lifestyle for himself/herself, and the above-described fluctuations in the total amount of savings are calculated according to this setting. At this time, the fluctuation range given to the fluctuation in the total amount of savings by the lifestyle is also estimated on the basis of various statistics.

In Fig. 2, the main display surface 202 is provided with a yearly income input section 205 for inputting the yearly income of the user, and an amount of savings input section 206 for inputting the current total amount of savings of the user. The user inputs the current yearly income to the yearly income input section 205, inputs the current total amount of savings to the amount of savings input section 206, and performs a specific operation such as clicking a start button 207 provided on the main display surface 202. As a result, a main display operation of the MoneyView function (to be described next) is performed.

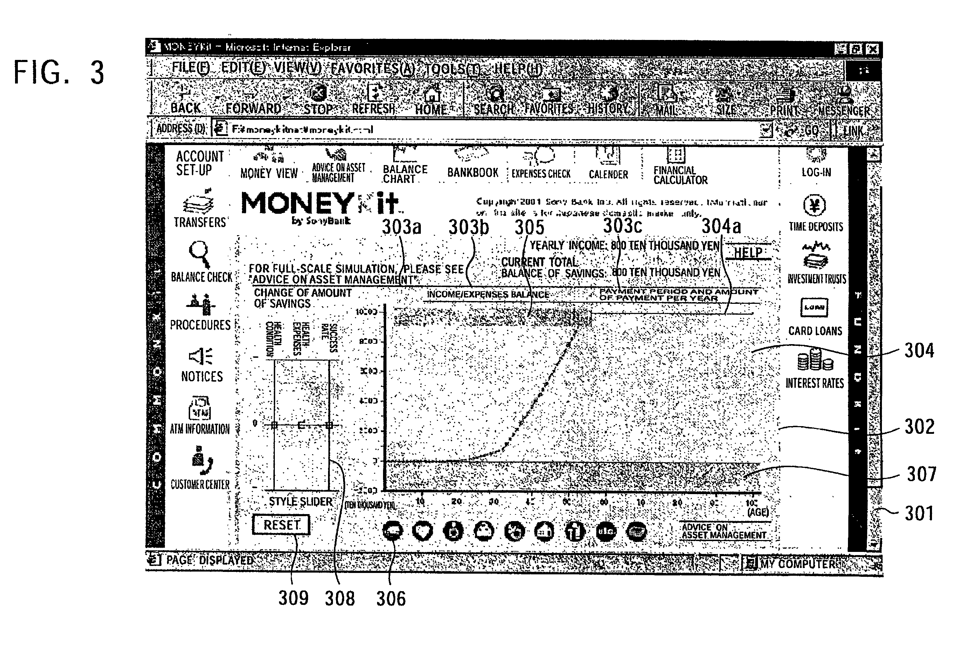

Fig. 3 shows a main display screen in which the MoneyView function is activated, which is an example of a screen displayed as a result of an amount of savings simulation operating. In Fig. 3, a main display surface 302 is provided with tabs 303a to 303c for switching between various display screens. The example of the display shown in Fig. 3 is a screen in a case where the amount of savings change tab 303a is selected. The switching between the display screens is performed by performing a specific operation such as clicking the tab corresponding to the desired function from among the tabs 303a to 303c.

The main display surface 302 of Fig. 3 is provided with an amount of savings graph 304. This amount of savings graph 304 is shown in a graph in which fluctuations with respect to time in the total amount of savings of the user from the current time on the basis of the yearly income and the current total amount of savings of the user, input in Fig. 2, and in which, for the fluctuations with respect to time, the vertical axis shows the total amount of savings and the horizontal axis shows the age of the user. When the fluctuations in the total amount of savings with respect to time are to be calculated, the current age of the user is necessary. For the current age information of the user, information stored in a server 901 or a client 907 may be used. Alternatively, an age input section may be further provided in Fig. 2, and the age input by the user may be used.

On the upper right of the amount of savings graph 304, an amount of savings display section 305 is provided. On this amount of savings display section 305, when the user performs a specific operation by using a pointer, etc., on a curve 304a which shows the fluctuations in the total amount of savings of the user with respect to time displayed on the amount of savings graph 304, the age of the user at the position at which the pointer exists and the estimated total amount of savings at that time are displayed.

Below the amount of savings graph 304, a plurality of event icons 306 are displayed. These event icons 306 correspond to the lifetime events which are described individually. Between the amount of savings graph 304 and the event icons 306, an event set-up section 307 is provided along the user age axis, which is the horizontal axis of the amount of savings graph 304. When the user performs a specific operation, such as dragging-and-dropping the event icons 306, and places the event icon 306 at a specific position of the event set-up section 307, the age of the user corresponding to that specific position is read, the fluctuations in the total amount of savings with respect to time are recalculated by assuming that a specific lifetime event corresponding to the event icon 306 has occurred at that age, and the display of the amount of savings graph 304 is also corrected on the basis of the recalculated results.

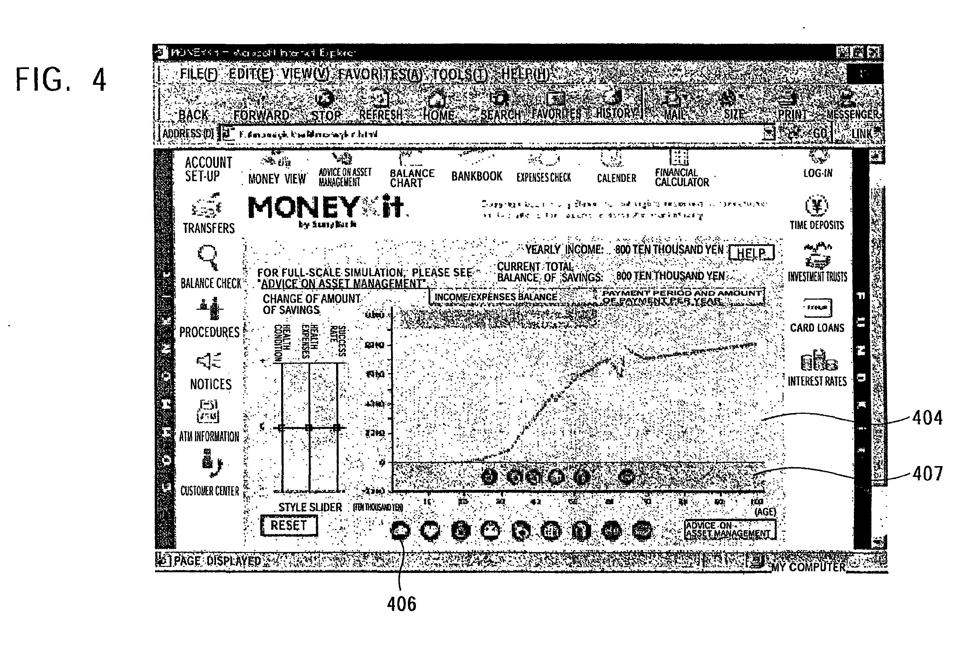

Fig. 4 shows a display screen after an event icon is set up in the event set-up section, which is an example of a screen displayed as a result of the amount of savings simulation operating. As shown in Fig. 4, as a result of event icons 406 being set up in an event set-up section 407, it is understood from a comparison with Fig. 3 that the display of an amount of savings graph 404 is changed. The position at which the event icon 406 is placed can also be changed within the event set-up section 407 by performing a specific operation such as dragging-and-dropping, the fluctuations in the total amount of savings with respect to time are recalculated according to the change of the position at which the event icon 406 is placed, and the display of the amount of savings graph 404 is also changed.

In the manner described above, a lifetime event, and expenses or incomes which occur in association with that event are associated with each event icon. In this case, there are cases in which the amount of expenses or income that occur in association with that event differs depending on individual users. As an example, a contract for a house loan and payments thereof occur as a result of a purchase of a house, and the total amount of the house loan differs depending on the life plan of the user. Therefore, in order to perform an estimation of the fluctuations in the total amount of savings with respect to time as accurately as possible, it is preferable that the amount of expenses and the income associated with the event icons be capable of being set by the user. In this MoneyView function, it is possible for the user to set the amount of expenses and the income associated with the event icons.

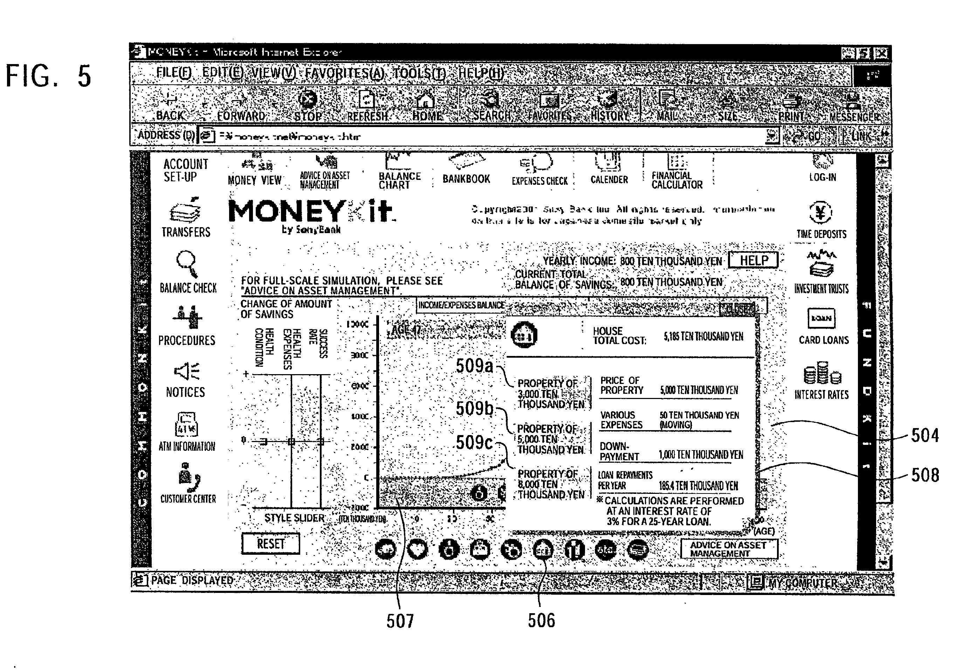

Fig. 5 shows a display screen in which an operation for setting the amount of expenses and the income corresponding to an event icon is performed, which is an example of a screen displayed as a result of the amount of savings simulation operating. In Fig. 5, an amount of expenses setting window 508 is a window for the user to set the amount of expenses or the income associated with each event icon. The amount of expenses setting window 508 is activated and displayed by the user performing a specific operation such as clicking an event icon 506 set up in an event set-up section 507.

The amount of expenses setting window 508 is provided with a plurality of amount of expenses setting buttons 509a to 509c (although in the example shown in the figure, the number of expenses setting buttons is three, the number is not limited) for setting the amount of expenses. When the user performs a specific operation such as clicking one of the amount of expenses setting buttons 509a to 509c, the amounts of expenses corresponding to the amount of expenses setting buttons 509a to 509c are associated with the event icons 506, and the amount of expenses setting window 508 is closed. As a result, the fluctuations in the total amount of savings with respect to time are recalculated, and an amount of savings graph 504 is corrected and displayed.

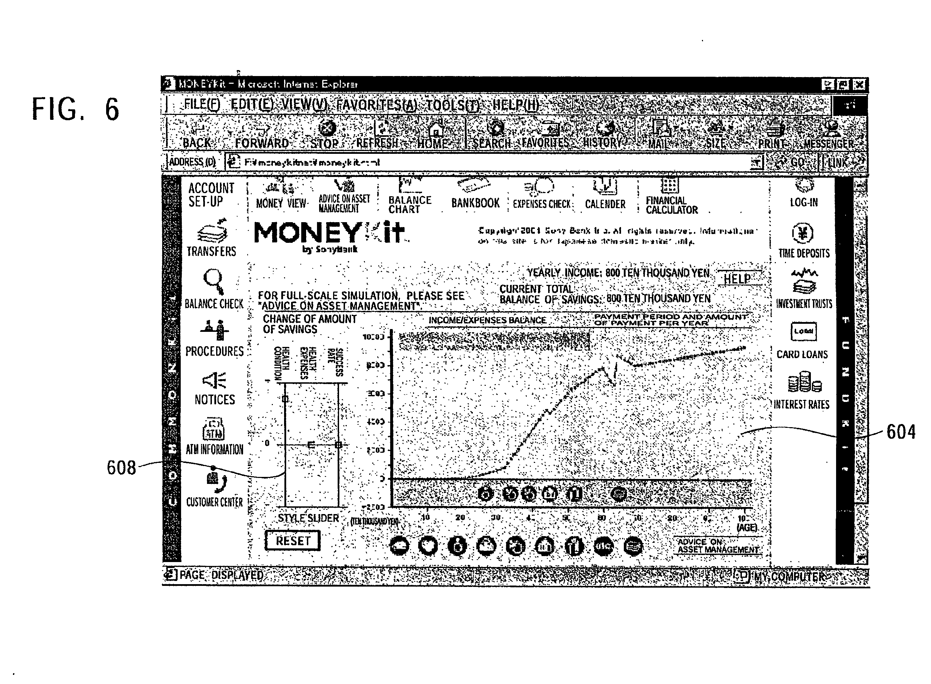

Referring back to Fig. 3, the main display surface 302 is provided with an adjustment element setting display 308. The adjustment element setting display 308 is used for the user to set adjustment elements (in the example shown in the figure, the number of the adjustment elements is three), such as the lifestyle of the user. For example, regarding each of the adjustment elements, such as the health condition ("health condition") of the user, the amount of expenses for hobbies ("expenses for hobbies"), and whether to live a life to become a successful person ("success rate"), the user sets whether there is a tendency for that ("+") or whether there is not much of a tendency for that ("-") in comparison with an average lifestyle. The user performs settings for individual adjustment elements by performing a specific operation such as dragging a slider in the center of the adjustment element setting display 308. As a result, the fluctuations in the total amount of savings with respect to time is recalculated, and the amount of savings graph 304 are corrected and displayed. Fig. 6 shows an amount of savings graph 604 after individual adjustment elements in an adjustment element setting display 608 are set by a user.

In Fig. 3, the main display surface 302 is provided with a reset button 309. When the user performs a specific operation such as clicking this reset button 309, the initial screen shown in Fig. 2 is displayed such that all the input values, such as the yearly income, are cleared.

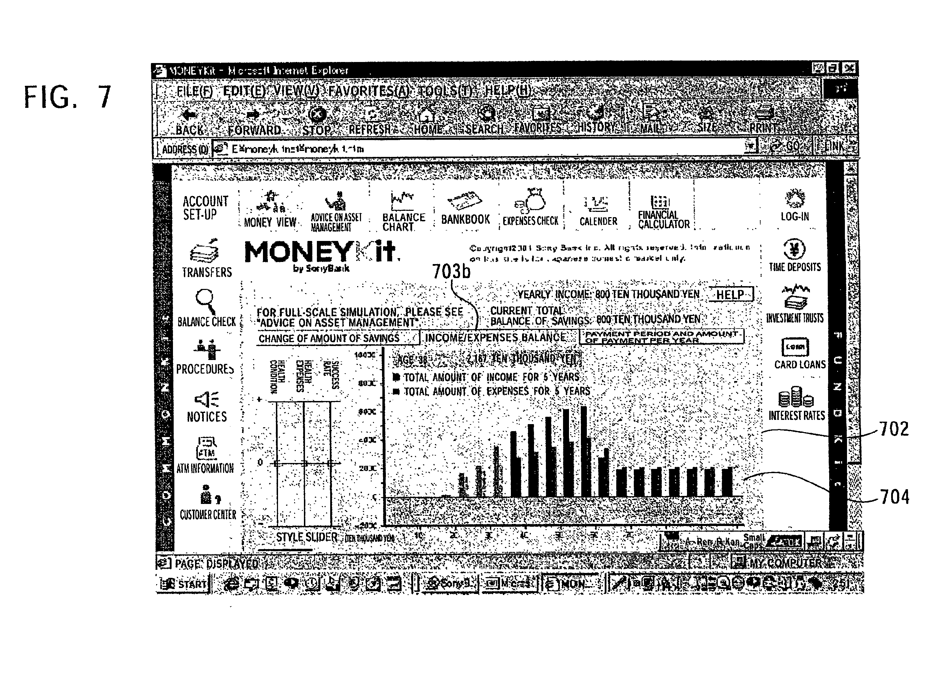

Fig. 7 shows a display screen in which an income/expenses balance screen is selected, which is an example of a screen displayed as a result of the amount of savings simulation operating. As described above, the selection of the income/expenses balance screen is performed by the user performing a specific operation such as clicking an income/expenses balance tab 703b. A main display surface 702 is provided with an income/expenses graph 704. This income/expenses graph 704 is such that, based on the yearly income of the user and the total amount of savings at the current time, input in Fig. 2, the fluctuations in the income/expenses of the user from the current time are calculated in units of five years, and the fluctuations with respect to time are shown in a graph in which the vertical axis shows the amount of income and expenses and the horizontal axis shows the age of the user. These fluctuations in the income/expenses of the user with respect to time are also varied according to the above-mentioned set-up of the event icons and the settings of the adjustment elements in the adjustment element setting display.

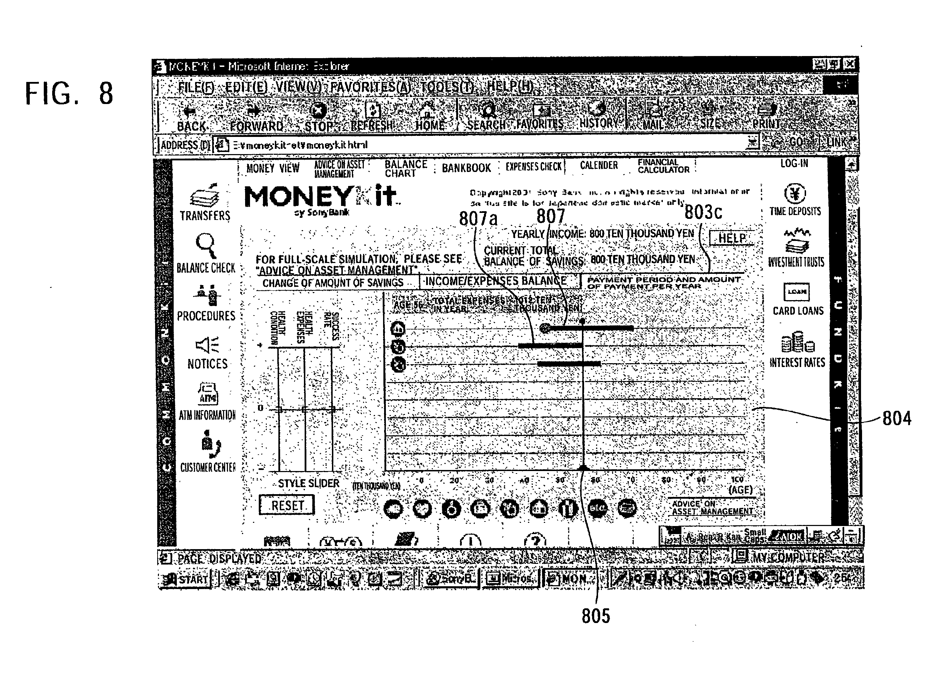

Fig. 8 shows a display screen in which a payment period screen is selected, which is an example of a screen displayed as a result of the amount of savings simulation operating. As described above, the selection of the payment period screen is made by the user performing a specific operation such as clicking a payment period tab 803c. A main display surface 802 is provided with a payment period graph 804. This income/expenses graph 804 is such that, based on the position at which the event icon set in Fig. 3 is placed, the payment period assumed for each event (icon) is calculated, and the length of this payment period is arranged for each event icon in the vertical direction and is shown in the form of a band in which the horizontal axis shows the age of the user. The payment period for each event varies according to the above-described set-up of the event icons and according to the setting of the amount of expenses or income associated with the event icon.

The payment period graph 804 is provided with a slider 805. As a result of the user performing a specific operation such as dragging this slider 805, the total amount of expenses necessary for all the events at the user age corresponding to the position of the slider 805 in the horizontal axis is displayed, together with the user age, on an amount of expenses display section 806.

For a band display 807 indicating the payment period of the payment period graph 804, when the amount of expenses becomes equal to or larger than a predetermined amount, that is, when it is estimated that many events occur in an overlapping manner and the total amount of expenses reaches a large amount at a particular age of the user, a band display 807a of that period is displayed in such a manner that the display form differs from the normal band display 807.

### (2. Configuration according to this embodiment)

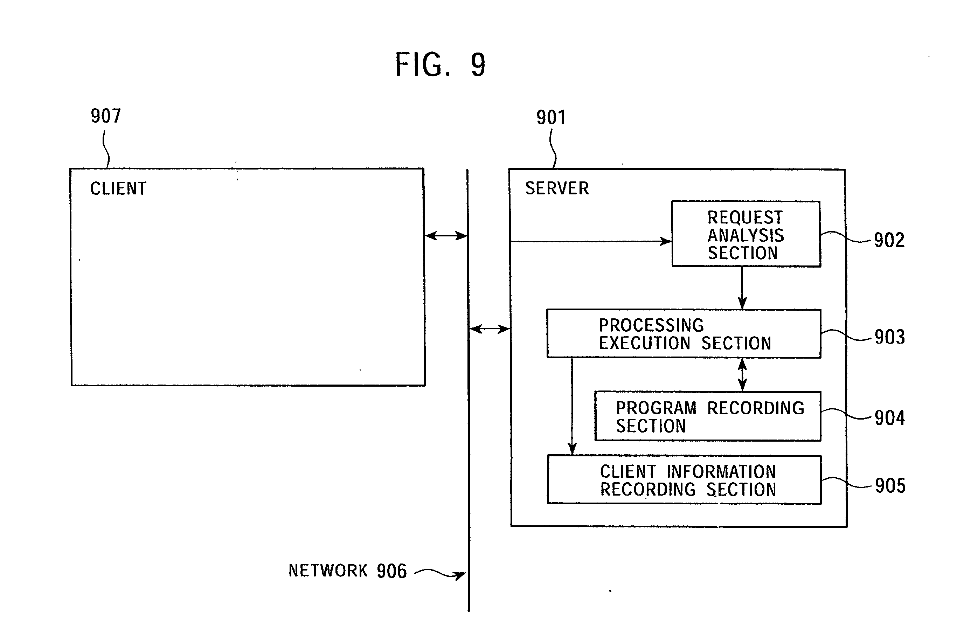

Next, the configuration and operation of various sections for performing the above-described operations will be described by using Figs. 9 to 13.

### (2.1. Overall configuration of system)

The overall concept of a system according to this embodiment will be described first by using Fig. 9. Fig. 9 is an overall view of a system according to this embodiment.

A network 906 operates in such a way that, when an apparatus connected to the network establishes a session with each target apparatus in either a wired or wireless manner, information can be transmitted and received between them. Therefore, in Fig. 9, the network 906 is shown so as to be connected by one backbone line. However, the network may be realized in such a manner that a plurality of networks are combined via a gateway like the Internet. Furthermore, even if the connection may be made temporarily by PPP connection without making a direct connection with what is commonly called a backbone line, no problem is posed as long as information can be transmitted and received between them when a session is established.

The server 901 is connected to the network 906, and provides information requested on the basis of a request from the client 907 which is directly or indirectly connected to the network 906 in a similar manner and through which information can be exchanged.

The server 901 can be realized by using IIS, etc., made by Microsoft Corporation. That is, the server 901 includes at least a request analysis section 902, a processing execution section 903, a program recording section 904, and a client information recording section 905.

The request analysis section 902 analyzes the contents of a request from the client 907, sent via the network 906, and determines the operation of the processing execution section 903 so as to determine the operation of the server on the basis of the request.

The processing execution section 903 has at least a function for providing information specific to the client which has made the request via the network on the basis of at least the output of the request analysis section 902, and a function for providing the requested program, and these functions are realized.

The program recording section 904 is connected to the processing execution section 903. When the processing execution section performs an operation for providing a program, the program recording section is referred to, the corresponding program is provided to the processing execution section, and as a result, the program is provided to the client 907 which has made the request. Here, the program is mainly a display program currently, and in addition, a program for laying out the computation display program, a specific example thereof being an HTML file, may be contained.

The client information recording section 905 is connected to the processing execution section 903. When the processing execution section performs an operation for providing information specific to the client which has made the request, the client information recording section is referred to, the recording information specific to the client is provided to the processing execution section, and as a result, the recording information is provided to the client which has made the request. Furthermore, the client information recording section 905 can record information obtained from the client as information specific to the client under the instruction from the processing execution section. This can be realized by recording an identifier specific to the client specified by cookie information and information obtained from the client when, for example, the client is a computer in which a so-called browser program, such as Internet Explorer or Netscape Navigator is operating.

For example, in this information, the age information of the operator who operates the client, and information specific to the client, set when the computation display program was operated previously, for example, the set-up position of the event icon, can be contained.

### (2.2. Configuration of client)

Next, the configuration of the client will be described.

### (2.2.1. Configuration of main sections of client)

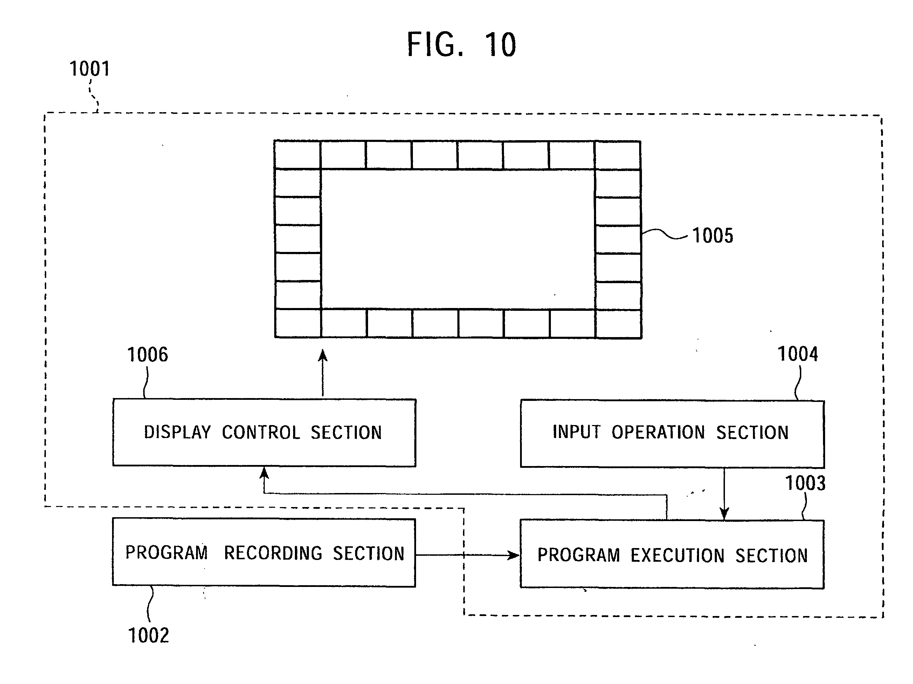

Here, the main sections of the client 907 will be described by using Fig. 10.

Fig. 10 shows the configuration of the main sections of the client.

The main sections of the client are mainly formed of a control section 1001 and a program recording section 1002.

In addition, the control section 1001 includes at least a display control section 1006, a display section 1005, an input operation section 1004, and a program execution section 1003.

The program execution section 1003 reads programs recorded in the program recording section 1002 in sequence, and determines the operation of the display control section 1006 and the input operation section 1004 in accordance with the instruction thereof. Furthermore, by changing the program reading position in accordance with an input from the input operation section 1004, the program execution section 1003 can perform an operation in accordance with that input. Furthermore, when necessary, the,program execution section can perform a process such as making a request to the server 901 through the network. In addition, when the program execution section is operating under the Windows OS made by Microsoft Corporation, if an instruction to operate a Windows application is given, a more flexible user interface can be realized, which is preferable.

The input operation section 1004 can receive an instruction given by the operator to this control section on the basis of the display on the display section 1005 or independently, and can notify the program execution section 1003 of the contents.

The display control section 1006 can receive an instruction from the program execution section 1003, and can control what is commonly called formation into an image, such as displaying at least a predetermined image element at a specified position through the display section 1005 in accordance with that instruction.

The display section 1005 is controlled by the display control section 1006, and shows image information on the display surface so that the operator can visually recognize the image information. Consequently, image information is displayed on the function display section within the display surface and the main display surface, so that the operator can view these pieces of the image information.

The program recording section 1002 can record at least a computation display program, records a program obtained from the server through the network or a program recorded on a recording medium, and reads the contents thereof on the basis of the request from the program execution section 1003.

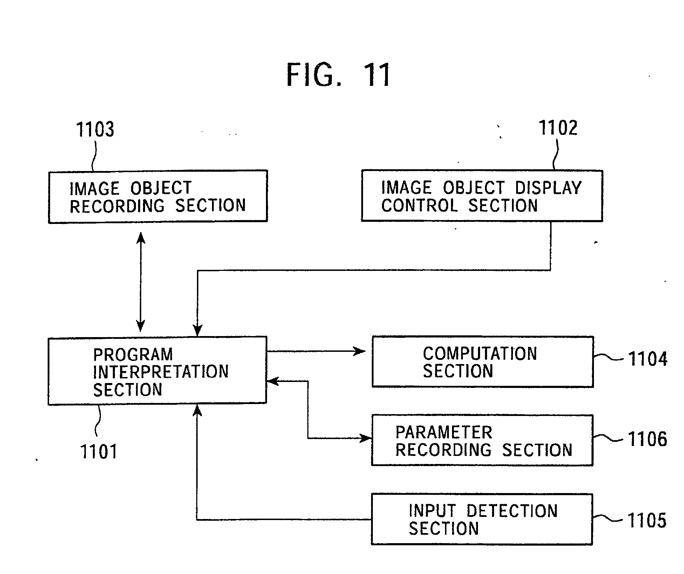

Next, the contents of the program execution section 1003 will be described in more detail by using Fig. 11. Here, for ease of understanding, a description is given on the assumption of an event-driven program in a so-called object-oriented program, in which operations proceed by transmitting messages among objects as in Windows made by Microsoft Corporation. In addition, standard sequential programs may be used in UNIX and Linux.

### (2.2.2. Structure of program execution section)

Fig. 11 shows the structure of the program execution section.

The program execution section includes at least a program interpretation section 1101, an image object recording section 1103, an image object display control section 1102, a computation section 1104, an input detection section 1105, and a parameter recording section 1106.

The program interpretation section 1101 reads sequences of information elements which are usually written in the order of the programs in sequence as regards at least the computation display program which is recorded in the program recording section 1002, and determines the operation of the image object recording section 1103, the image object display control section 1102, the computation section 1104, the input detection section 1105, and the parameter recording section 1106 on the basis of the information elements. Furthermore, the reading order is changed depending on the information elements. Furthermore, the programs are not limited to those recorded in the program recording section, and it is preferable that a program (usually, this is a set of small-scale programs) which operates in response to a Windows message possessed by the image object recorded in the image object recording section (to be described later) be also capable of being made an object to be processed

The image object recording section 1103 is a section for recording a predetermined information element, and the information has contained therein basic information for making a display on the display section. For example, in the case of a photograph and an icon, two-dimensional bit sequence information may be used, and information in which vector information simply indicating the contour thereof and information indicating to fill in the contents thereof are packed may be used.

Here, the image object is information containing basic information for making a display on the display section, and a program for defining predetermined operation procedures which are performed when the image is specified may be recorded therein. This program is usually a set of small-scale programs, and in the program interpretation section, one of these programs can be selected and executed in such a manner as to correspond to a Windows message obtained from notified contents of the input detection section 1105.

When a request for a computation occurs, the computation section 1104 responds to this request on the basis of the operation of the program interpretation section, and returns the computation result. For the computation contents, addition, subtraction, multiplication, and division are preferably contained, and in addition, there is preferably an n-th power computation.

The input detection section 1105 receives operation information detected by the input operation section 1004 and notifies the program interpretation section of the operation information. More specifically, one of a plurality of programs which can be interpreted in the program interpretation section can be selected, and the input value can be transmitted.

### (3. Operation in first embodiment)

Next, the operation of this embodiment will be described. Here, a case in which this embodiment is specifically applied to an application for displaying a state in which the amount of savings changes by freely setting events related to various incomes and expenses described above which can occur while the user lives (hereinafter referred to as "amount of savings simulation") is used as an example, and the operation thereof will be described.

First, to enter this application, the selection of the function displayed on the function display section is started. The program for this selection will be described by using Figs. 9 to 12, and Fig. 15.

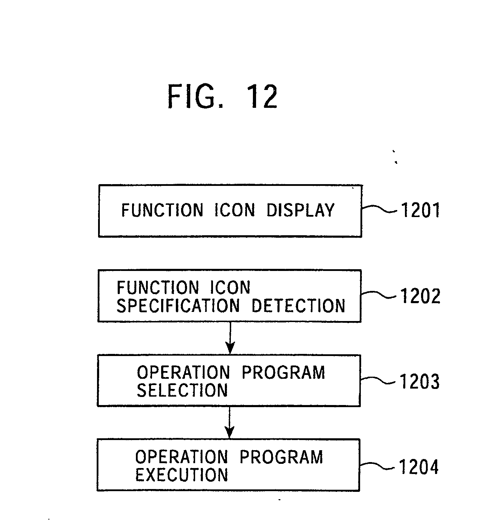

Fig. 12 shows the structure of a so-called initial program, which is called a portal page.

The initial program contains an information element group 1201 indicating a function icon display, an information element group 1202 for detecting a function icon specification, an information element group 1203 for selecting a program to be operated on the basis of the specification of the detected function icon, and an information element group 1204 for defining the contents of the selected program.

The information element group 1201 indicating a function icon display contains information for specifying an image object and a place where the image object is displayed with regard to the function icon.

Initially, when the operator wants to operate this application, a request is made to the server 901, in which this application is recorded as a program, so as to provide the corresponding initial program.

As a result, the request analysis section 902 analyzes the contents, and instructs the processing execution section 903 to extract the corresponding initial program from the program recording section 904. In response to this instruction, the processing execution section extracts the initial program from the program recording section and provides this program to the client 907 which has made the request.

The provided initial program is temporarily recorded in the program recording section 1002, and depending on the contents, the program is recorded in the image object recording section 1103. Then, the contents are executed by the program execution section 1003.

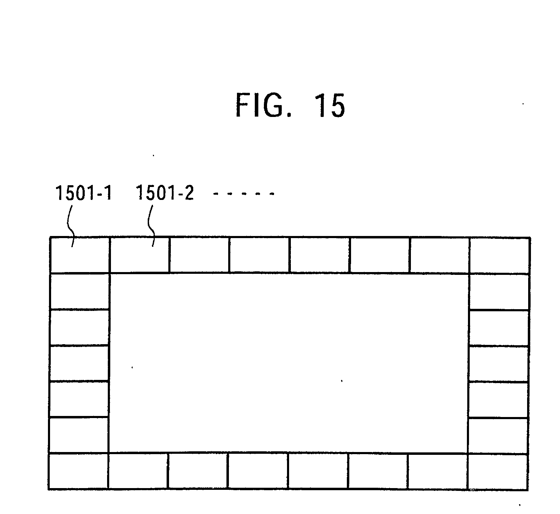

Accordingly, first, the function icon display 1201 within the initial program is executed. Then, the image object contained therein is read by the program interpretation section 1101, the display position thereof is determined via the image object display control section 1102, and the image object is displayed at the specified place on the display surface 1005 by the operation of the display control section 1006. As a result, the image objects are displayed as indicated by 1501-1 and 1501-2 on the display surface, as shown in Fig. 15. Here, Fig. 15 shows an example of a display of the initial program. Of course, this display layout is realized because it is contained in advance in the information element group 1201 indicating a function icon display, and when another layout is desired to be taken, the setting may be performed in such a manner.

Next, when the operator specifies a function icon with respect to the input operation section 1004, the specification is detected, a message is issued, this message is received by the input detection section, and the message is transmitted to the program interpretation section. As a result, the program interpretation section 1101 selects (1203) the program contained in the image object corresponding to the message and executes (1204) this program.

Here, for the program to be executed, another program which is contained already in the initial program received by the earlier request may be used. Alternatively, a request may be made once more to the server, and the program may be extracted.

Here, if it is assumed that the computation display program is extracted once more, the computation display program is recorded in the program recording section 1002 again, and the program is recorded in the image object recording section 1103 if necessary, and the contents thereof are executed.

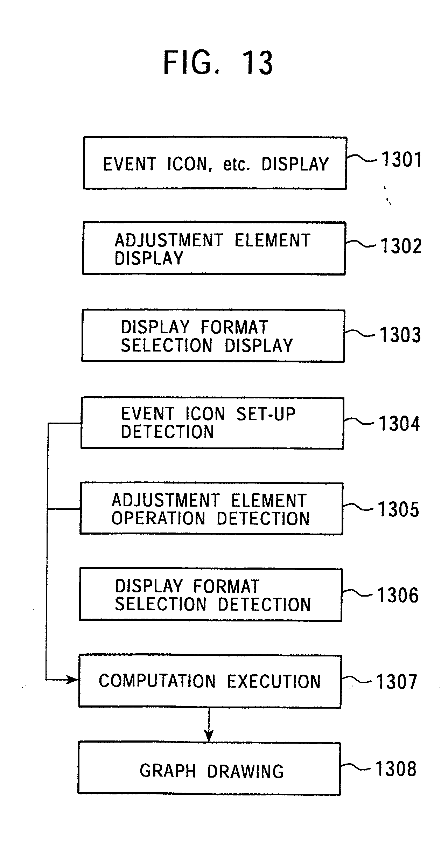

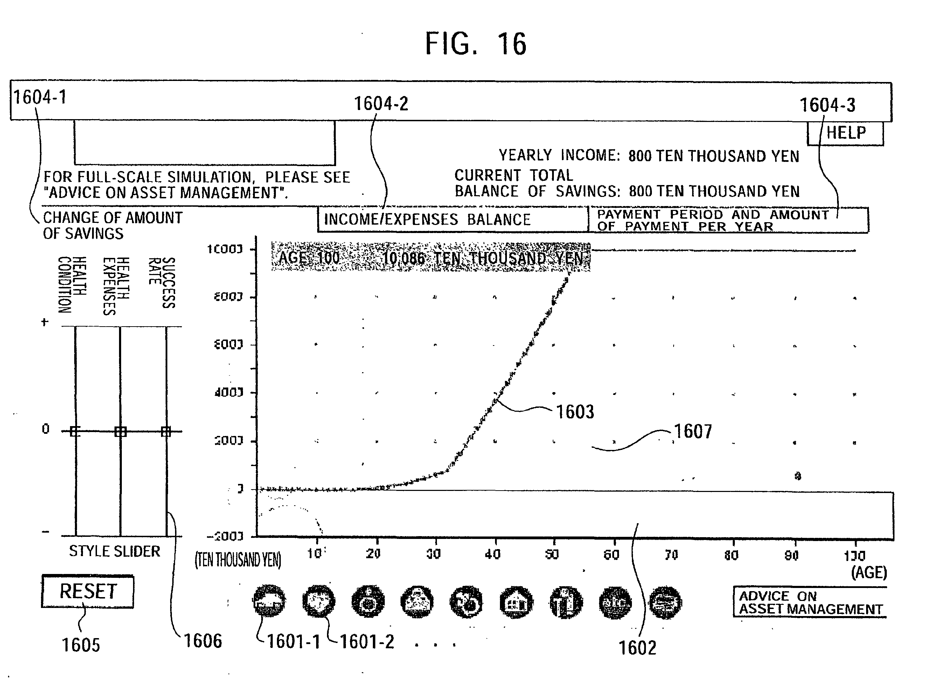

The structure of this re-loaded computation display program is shown in Fig. 13, and the description continues by using Figs. 13 and 16.

This computation display program contains an information element group 1301 for specifying that at least an event icon and an event set-up section be displayed, an information element group 1304 for detecting that the event icon is set up at a specific position by an operation, an information element group 1307 for specifying computation execution for performing a computation on the basis of various detected values, and an information element group 1308 for specifying that a graph be displayed. Furthermore, if the computation display program contains an information element group 1302 for specifying that adjustment elements be displayed, an information element group 1303 for specifying that a display format be selected, an information element group 1305 for detecting that the adjustment element has been operated, and an information element group 1306 for detecting that the display format selection has been operated, this contributes to the convenience of the operator, which is preferable. Here, on the assumption that these information element groups are contained, the description continues by using Fig. 16 together.

For the computation display program recorded in the program recording section 1002, first, the information element group 1301 for specifying that an event icon and an event set-up section be displayed is read, and this group is interpreted by the program interpretation section 1101. Then, the program interpretation section 1101 causes, in accordance with the information elements, a background image 1607, event icons 1601-1, 1601-2,..., and the display position of an icon set-up section 1602 to be determined by the operation of the image object display control section 1102 on the basis of the information contained in these image objects, and causes the display control section 1006 to operate so as to display these. As a result, these are displayed on the main display surface.

Next, the information element group 1302 for specifying that adjustment elements be displayed is read, and this group is interpreted by the program interpretation section 1101. Then, an adjustment element 1606 is displayed in accordance with this interpretation. This adjustment element 1606 is also an image object, which contains a program which operates as a result of this element being selected.

Furthermore, the information element group 1303 for specifying that a display format be selected is read, and this group is displayed as a "change of amount of savings" tag 1604-1, an "income/expenses balance" tag 1604-2, and a "payment period and amount of payment per year" tag 1604-3. Since these tags are image objects, of course, an operation program can be contained as the information therefor.

In addition, by causing an information element group (not shown) for displaying an image object to be contained, a reset switch 1605, etc., can be displayed. Regarding the sequence of the information elements for these displays, it does not matter which one is set up first.

At this point in time, it is possible for the operator to specify the event icon 1601-1 and to place it in the event set-up section 1602. For this set-up, preferably, a so-called drag-and-drop technique in which a mouse cursor is positioned on an event icon, the mouse cursor is moved to the target position of the event set-up section while pressing the mouse button, and the mouse button is released at this position is used. However, the technique is not limited to this, and any technique may be used as long as it is an interface capable of specifying an event icon and specifying a set-up position, such as specifying that position using a tablet.

The icon set-up section 1602 is designed so that the position in the X direction thereof (in the horizontal direction in the figure) is defined as time information, and when an icon is placed, the position can be determined as time information which is generated by the event on the basis of the position of the event icon in the horizontal direction. Here, the time information need only be accurate enough to allow an event to be specified on a time series with the necessary accuracy, and in this embodiment, usually, it is not necessary to include the hours and minutes.

Next, when an operation for setting up an event icon in this manner is performed, the input operation section 1004 detects this operation, and the input detection section 1105 receives this and notifies the information to the program interpretation section 1101. In response to this notification, the program interpretation section 1101 reads the image object related to the event icon from the image object recording section 1103, obtains the information on that event, and performs a computation by using this information (1307).

For example, if the event icon 1601-1 is assumed to be an icon indicating a purchase of a car, the time is determined from the position at which this icon is placed, and since this means an expense, a calculation for subtracting the expense from the amount of savings at this time is performed. Then, for the calculated result, display control is performed to draw the elapsed time as a graph form (1308).

Similarly, when an operation is detected with regard to an adjustment element, the adjustment element is determined on the basis of the information element related to the adjustment element operation detection (1305), and this result is used to calculate the amount of savings. In Fig. 16, three types of health condition, hobby expenses, and success rate are shown as the adjustment elements. These are calculated so that a small amount of correction is made, for example, when it is assumed that the health condition is good, the amount of savings increases per hour, when it is assumed that the hobby expenses are large, the amount of savings decreases per hour, and when the success rate is increased, the amount of savings increases per hour.

Furthermore, when display format selection tags 1604-1, 1604-2, and 1604-3 are specified by the information elements related to the display format selection detection, a graph display program (1308) is operated so as to make a display corresponding to one of these, and a display can be made in accordance with this.

### (4. Another case 1 in which no server is used)

Although in this embodiment, a computation display program is loaded from the server, the computation display program may be recorded on a recording medium such as a CD-ROM, and a computer may read and execute this program. (5. Another case 2 in which JavaScript is used)

When a script language is used for the computation display program, for example, when Javascript is used, in addition to the case in which computations and display control are performed on the client side in the manner described above, if computation execution and image object display control are performed on the server side, the same interface can be realized comparatively easily.

More specifically, in this case, when various kinds of dragging-and-dropping are performed, the information thereof is sent to the server, where display position determination of the image object, computation, and the graph drawing function are performed. The created graph information is sent to a browser program of the client, and the client merely displays this graph. With such a configuration, an increase in the amount of communication is expected, and since collective processing can be performed by a high-speed server, there are advantages in that the reliability of processing is increased, and furthermore, the collection of user information becomes easy.

### (6. Another case 3 by apparatus dedicated to client)

Although in the foregoing, a description is given on the assumption that these are executed by a general-purpose computer which executes programs, the above-described function sections may be realized by hardware instead of software. In this case, this function can be realized by a comparatively small apparatus, presenting the advantage in that portability is excellent.

### (7. Another case 4: basic information 1 for computation)

Not only is the basic information for computation in this embodiment recorded in the computation display program in advance, but an input from the user may be received as necessary. For example, when an event icon which is dragged-and-dropped is specified as a mouse click, it is possible to display a dialog box for changing the value used for the event and to prompt the user to input a value therefrom. For example, regarding the event icon for a purchase of a car, it is also possible to prompt the user to input the price of the car and the period/type in the case of payment by installments.

Furthermore, it is also possible to specially display a dialog box for a current amount of savings and the current yearly income which are significant for the change of the amount of savings and to use the values obtained herein.

### (8. Another case 5: basic information 2 for computation)

Furthermore, the basic information for computation in this embodiment may be not only recorded in the computation display program in advance, but also an input of the basic information for computation may be received from the server as necessary. For example, the current age of the operator may be transmitted from the server, and based on this age, the amount of savings may be calculated. In this case, the age which is input in advance is temporarily recorded in the client information recording section 905 on the server, and when this is necessary for a computation, information may be extracted therefrom and be used. In a case where services, such as transmitting a message on birthdays to users collectively from the server, are performed, a higher accuracy of calculations of the amount of savings in accordance with each user can be expected.

### (9. Calculations of fluctuations)

When a timing at which the above-described computation and display are performed is made to be the time when the input operation section 1004 detects that there is an operation by the operator, such as the event icon being specified or an operation for an adjustment element being performed, how much the amount of savings fluctuates as a result of the item, on which an operation is performed, working as a fluctuation factor can be known, and it becomes possible to have a function as fluctuation calculations.

### (10. Display of values in graph)

When the computation result is also reflected, as an image object, in the drawn graph, if a mouse cursor is positioned on the graph, money at that position can be displayed.

### (11. Another application of amount of savings simulation)

Not only can the above-described amount of savings simulation be recognized simply as the balance in an account, but also it can be used for the balance of payment in an insurance, etc. In this case, for example, the simulation can be used as payment simulation when there is a no-claims discount in car insurance, thus allowing the system to be used as a comprehensive financial planning system.

### Embodiments

The above-described embodiments can be carried out in various ways. For example, when this is to be realized on a computer which runs under the Windows environment of Microsoft Corporation, the computation display program can be realized by Flash made by Macromedia, Inc., or Javascript, or ActiveX defined by Microsoft Corporation.

### (Case in which Flash made by Macromedia, Inc. is used)

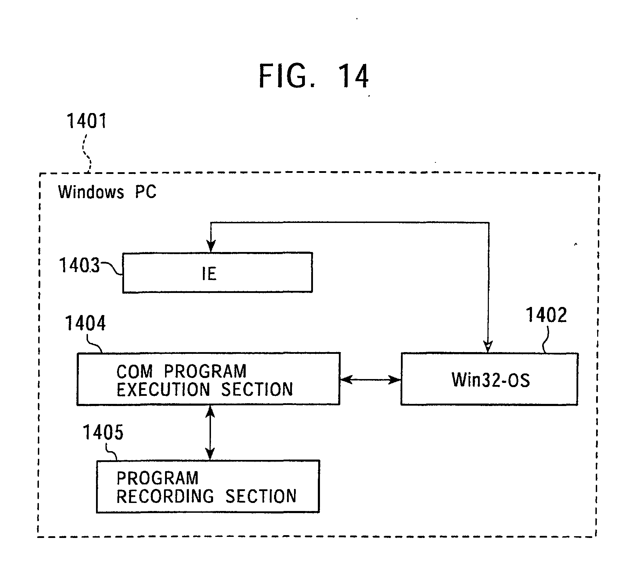

Here, a case in which Flash made by Macromedia, Inc. is used will be described by using Fig. 14.

When Windows is used, as a browser program, preferably, Internet Explorer 1403 or Netscape Navigator is used. The reason for this is that connection with the server becomes easy, and when content of Flash is loaded, a program for interpreting and executing this content can be automatically downloaded over the network.

A program for interpreting and executing this Flash content is recorded in a COM program execution section 1404, and it can be called from Internet Explorer 1403 by the operation of Win32-OS1402. Then, the Flash content is recorded in a program recording section 1405, this content is referred to from the COM program execution section, and the content is executed.

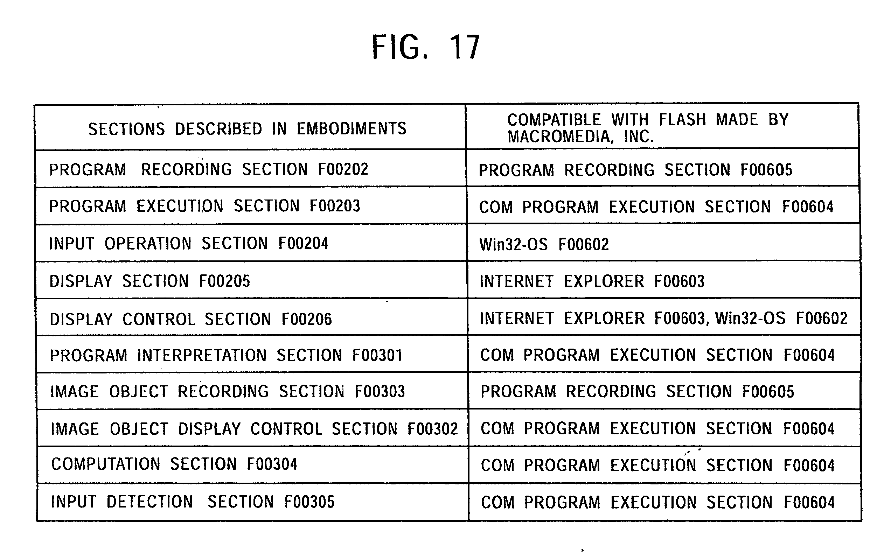

In this case, all sections described in the above-described embodiments are made to correspond as shown in Fig. 17.

In this manner, the functions in the above-described embodiments may be realized in such a manner that these functions are distributed or integrated in sections inside the computer.

As has thus been described, according to the.present invention, the operator easily operates event icons containing the expense items of the operator, adjustment elements, etc., and it becomes possible to quickly recognize a profile related to the amount of savings of the operator. As a result, there is a significant advantage in that it is possible to design an active life plan such that a lifestyle including the kinds of things desired can be designed within the limits of the amount of savings by, for example, first determining what is desired and then designing the corresponding lifestyle.

## Claims

1. An image providing apparatus, wherein the fluctuation in output content with respect to time is calculated on the basis of an initial value of the output content and a parameter affecting the fluctuations in the output content, and an image is generated from the fluctuation in the output content with respect to time.

2. An image providing apparatus according to Claim 1, wherein, in said fluctuation calculation, the fluctuation in the output content with respect to time is also calculated on the basis of the time of said initial value.

3. An image providing apparatus according to Claim 2, wherein said output content is the balance of a financial product, said parameter is the income of a contractor of the financial product, said initial value is the balance of the financial product at a specific time, and said time is the age of the contractor at the specific time.

4. An image providing apparatus according to Claim 3, wherein, in said fluctuation calculation, the fluctuation in the balance of said financial product with respect to time is also calculated on the basis of the presence of planned lifetime events.

5. An image providing apparatus according to Claim 4, wherein, in said fluctuation calculation, the fluctuation in the balance of said financial product with respect to time is also calculated on the basis of the age of said contractor when said lifetime events are set.

6. An image providing apparatus according to Claim 5, wherein, in said fluctuation calculation, the fluctuation in the balance of said financial product with respect to time is also calculated on the basis of the estimated expenses or income which are set for said lifetime events.

7. An image providing apparatus according to Claim 3, wherein, in said fluctuation calculation, the fluctuation in the balance of said financial product with respect to time is also calculated on the basis of a lifestyle set by said contractor.

8. An image providing apparatus according to Claim 5, wherein, in generating said image, data for forming a two-dimensional graph from the fluctuation in said financial product with respect to time, in which the balance of said financial product and time are the respective axes, is created, data for forming an icon indicating said lifetime event into an image at the same time is created, and in said fluctuation calculation, the age of said contractor when said lifetime event corresponding to said icon is set is calculated from the time of said graph at which said icon is set up.

9. An image providing apparatus according to Claim 5, wherein, in said fluctuation calculation, based on the balance of said financial product, the income of said contractor, and said lifetime events, fluctuations in the income and the expenses of said contractor with respect to time are calculated, and in said formation into an image, data for forming the fluctuation in the incomes and the expenses with respect to time is also formed into an image.

10. An image providing method comprising the steps of calculating the fluctuation in output content with respect to time on the basis of an initial value of the output content and a parameter affecting the fluctuation in the output content; and creating data for generating an image from the fluctuation in the output content with respect to time.

11. A recording medium having stored therein a program for causing an image providing apparatus to perform an operation to calculate the fluctuation in output content with respect to time on the basis of an initial value of the output content and a parameter affecting the fluctuation in the output content and for creating data for generating an image from the fluctuation in the output content with respect to time when the program is read into the image providing apparatus.

12. A computation display program, which is formed by a sequence of a plurality of information elements, in a control section which comprises at least a display section and an operation input section and which selectively performs, based on a specific information element, at least, display of an image at a specific position on the display section, specification of a specific image object on the basis of information from the operation input section, specification of coordinates on the basis of the information from the operation input section, display of a specific image object at specific coordinates, and arithmetic computation, the program comprising the steps of displaying an event icon which is an element for at least one computation, and an event set-up section for specifying at least a one-dimensional value by setting up event icons by an operation, performing a predetermined computation on the basis of the position of the event icon set up in the event set-up section by an operation, and displaying results on the basis of the computation results.

13. A computation display program according to Claim 12, wherein said result display can be formed in at least two formats, a display for prompting the selection of the format is formed, the format is selected on the basis of information from said operation input section, and the result is displayed.

14. A computation display program according to Claim 12, wherein, when said operation input section detects an input operation specific to said event icon, a display for prompting an input of a numerical value is formed, and said computation is performed on the basis of the numerical value detected by.the operation input section.

15. A server for providing a computation display program according to Claim 12.

16. A server for providing a computation display program according to Claim 13.

17. A server for providing a computation display program according to Claim 14.

18. An information recording medium having recorded therein a computation display program according to Claim 12.

19. An information recording medium having recorded therein a computation display program according to Claim 13.

20. An information recording medium having recorded therein a computation display program according to Claim 14.
